# FASCICULE DE BREVET EUROPEEN

(11) **EP 0 576 385 B1**
(45) Date de publication et mention de la délivrance du brevet: **21.05.1997**
(21) Numéro de dépôt: 93480079.8
(22) Date de dépôt: 24.06.1993
(51) Int. Cl.: A21B 1/26, F24C 15/32

(54) **Ensemble de production d'air chaud, notamment pour fours de boulangerie, pâtisserie, ou analogue, à chariots fixes ou mobiles à recyclage d'air**
Vorrichtung zum Erzeugen von Heissluft, insbesondere für Backofen mit stationären oder mobilen Wagen und mit Luftzirkulation
Unit for the production of hot air, in particular for baking ovens with stationary or mobile trolleys and air recycling

(30) Priorité: 26.06.1992 FR 9208130
(43) Date de publication de la demande: 29.12.1993
(73) Titulaire: TIBILETTI SNC, F-06340 La Trinité (FR)
(72) Inventeur: Ruelle, Michel, F-06200 Nice (FR)
(74) Mandataire: Hautier, Jean-Louis

(56) Documents cités:
- EP-A- 0 237 455
- FR-A- 2 390 928

## Description

La présente invention concerne un ensemble de production d'air chaud, notamment pour fours de boulangerie, pâtisserie, ou analogue, à chariots fixes ou mobiles, à recyclage d'air.

De nombreux documents peuvent décrire l'état de la technique.

*Parmi ceux-ci, le document FR-A-2.558.338 concerne un four de cuisson caractérisé en ce que le système de chauffage comprend des moyens de chauffage arrangés de part et d'autre du chariot dans des plans sensiblement verticaux sur approximativement toute les surfaces latérales de la chambre de cuisson, et en ce que des moyens ventilateur sont prévus dans la chambre de cuisson pour le brassage de l'air dans cette chambre et pour l'égalisation de la température de cuisson dans celle-ci.*

*Le document FR-A-2.615.359 concerne un four de cuisson caractérisé en ce que la chambre de cuisson est définie par un caisson interne à l'enveloppe avec laquelle il délimite un compartiment arriére et deux passages latéraux, le caisson communique par des ouvertures avec les passages et le compartiment, le brûleur à gaz est situé en partie basse arrière d'une gaine d'aspiration débouchant dans le compartiment, et le ventilateur assure une aspiration des gaz brûlés à partir de la gaine et une aspiration de recyclage des gaz de cuisson à partir de la chambre.*

*Le document FR-A-2.643.225 concerne une enceinte de cuisson bordée latéralement par deux caissons de distribution du flux d'air, communiquant chacun, d'une part, avec la chambre de cuisson par au moins une paroi perméable à l'air, et, d'autre part, avec les extrémités d'un ensemble d'alimentation et de récupération du flux d'air, tandis que cet ensemble, d'alimentation et de* *récupération du flux d'air, est composé de deux conduits horizontaux indépendants, raccordés latéralement aux caissons et, dans leur partie centrale, à des moyens d'inversion du sens de circulation du flux, et que ces moyens communiquent aussi avec des conduits d'entrée et de sortie des moyens et comportent des volets motorisés aptes, de manière cyclique, à obturer l'un ou l'autre des orifices de communication de ces moyens avec les conduits.*

*Le document EP-A-0.055.792 concerne un four doté d'échangeurs de chaleur placés directement à l'intérieur de la chambre de cuisson, distribués uniformément sur les deux côtés et éventuellement sur la paroie postérieure. Les échangeurs, constitués par des tubes métalliques verticaux, sont parcourus à leur interne par des gaz chauds produits par un brûleur à gaz-oil ou semblables. Les gaz ne sont pas en contact avec les substances à cuire, qui ainsi ne prendront pas de mauvaises odeurs.*

*L'état de la technique peut être complété par les deux autres brevets suivants :*
- *FR-A-2.390.928 (WITTIG) : four-rôtissoire à air pulsé, comprenant un bâti à l'intérieur duquel est aménagée une chambre de cuisson, qui contient un support tournant pour recevoir des plats, viandes, volailles etc. à cuire, des moyens pour chauffer la chambre de cuisson et pour faire circuler l'air dans cette chambre autour des plats à cuire, caractérisé en ce que les moyens pour faire circuler l'air dans la chambre de cuisson comprennent au moins deux turbines placées dans les parois latérales de la chambre de cuisson de façon à brasser l'air chaud de manière homogéne autour des plats à l'intérieur de ladite chambre.*
- *EP-A-0.237.455 (VOEGTLIN) : ce brevet décrit un four de boulangerie à chariot tournant comprenant une chambre de cuisson, une porte d'enfournement, un coffret de commandes électriques, un canal de recyclage, un ventilateur de recyclage, des moyens de chauffage de l'air, une mécanique et une motorisation de la rotation du chariot, un collecteur de soufflage avec ses fentes verticales et un appareil de production de vapeur et comportant une structure constructive, de largeur correspondant au diamètre du volume cylindrique engendré par le chariot tournant, constituée d'un noyau central, de forme parallélépipédique rectangle de largeur correspondant à la largeur de la porte d'enfournement, elle-même déterminée par la largeur du chariot tournant, et de* *deux couvercles latéraux amovibles présentant un évidement légèrement supérieur à la moitié de la différence entre la largeur et la diagonale du chariot tournant.*

Le brevet VOEGTLIN utilise un échangeur de chaleur qui est disposé au-dessus du toit du four, le ventilateur de recyclage est logé dans le plafond. Cet échangeur est donc bien évidemment au-dessus de la chambre de cuisson. Cette disposition technique est contraire à l'invention. Elle présente d'ailleurs tous les inconvénients largement décrits dans le préambule de la description (encombrement du four, mauvais échange des flux de chaleur) ce qu'évite justement l'invention.

Le brevet WITTIG : ce four est une rôtissoire à air pulsé.

L'échangeur de chaleur est contenu dans les parois latérales du four. Au contraire le four selon l'invention, utilise des échangeurs dans la chambre de cuisson disposés dans les encoignures.

Tous ces fours répondent à un besoin essentiel du boulanger, qui est de disposer d'un four dont le chauffage soit le plus efficace possible.

Néanmoins, la disposition des moyens de ventilation et des moyens de chauffage n'est pas optimale pour obtenir, à volume de chambre de cuisson équivalent, un volume d'enceinte plus faible du four.

La présente invention se propose de remédier à ce problème d'encombrement en proposant un ensemble de production d'air chaud dont la disposition des moyens de ventilation et des moyens de chauffage est nouvelle et originale.

L'objet principal de la présente invention est de proposer un ensemble de production d'air chaud, notamment pour fours de boulangerie, pâtisserie, ou analogue, à chariots fixes ou mobiles, à recyclage d'air, du type formé par une enceinte entourant une chambre parallélépipèdique de cuisson comportant, au moins, un échangeur de chaleur vertical et une série de ventilateurs disposée verticalement sur la paroi intérieure arrière de la chambre de cuisson ; chaque échangeur de chaleur étant chauffé par un brûleur disposé à la base ou à la partie supérieure de l'échangeur de chaleur vertical, tandis que dans la partie supérieure de la chambre, on trouve un collecteur aboutissant à une cheminée.

L'invention, définie ci-dessus, est caractérisée par le fait qu'un échangeur de chaleur vertical est disposé dans au moins une encoignure de la partie arrière de la chambre de cuisson, et que la forme de l'échangeur est apte à coopérer avec les formes de l'encoignure pour créer des espaces en avant et en arrière de l'échangeur de chaleur, favorisant les échanges d'air.

Un autre objet de la présente invention est que l'ensemble de production d'air chaud est caractérisé par le fait qu'il comporte deux échangeurs de chaleur verticaux qui sont disposés dans les deux encoignures de la partie arrière de la chambre de cuisson, la série de ventilateurs occupant la partie médiane de la paroi arrière de la chambre de cuisson.

Un autre objet de la présente invention consiste en ce que l'ensemble de production d'air chaud est caractérisé par le fait que chaque échangeur de chaleur possède une section transversale triangulaire, ou de forme similaire, qui coopère avec une encoignure à angle droit de la partie arrière de la chambre de cuisson.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une coupe transversale de l'ensemble de production d'air chaud, selon la coupe B-B de la figure 2.

La figure 2 est une coupe longitudinale, au niveau des deux échangeurs de chaleur et de la série de quatre ventilateurs de l'ensemble de production d'air chaud, selon la coupe A-A de la figure 1.

La figure 3 est une coupe longitudinale d'un échangeur de chaleur selon l'invention, mais où, seule, la circulation d'air est différente.

La figure 4 est une coupe transversale selon C-C de l'échangeur de chaleur présenté à la figure 3.

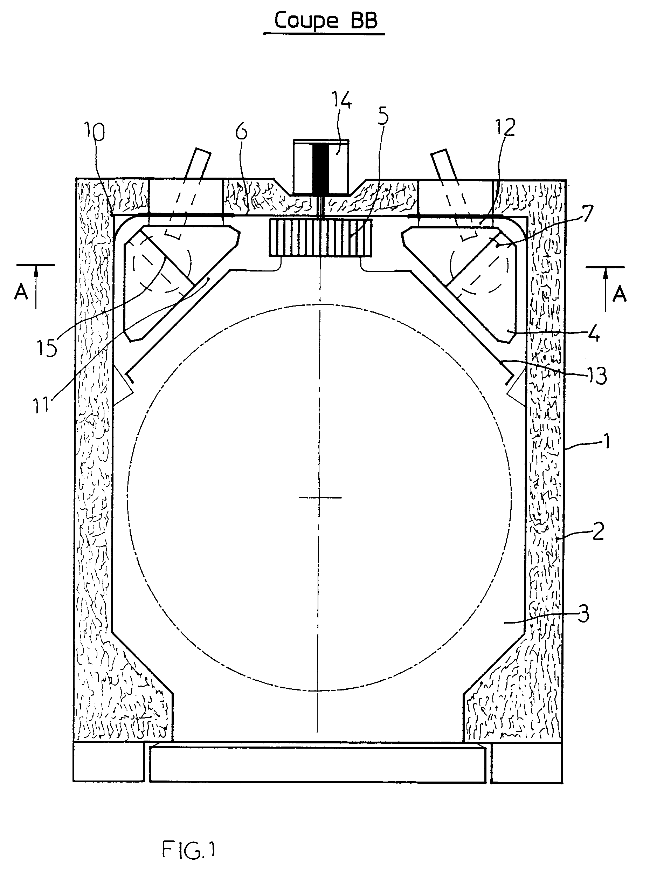

La figure 1 décrit un ensemble de production d'air chaud 1 formé par une enceinte 2 délimitant une chambre de cuisson 3.

Placé contre la paroi intérieure arrière 6, on trouve, disposé dans chacune des deux encoignures 10 de la partie arrière de la chambre de cuisson 3, un échangeur de chaleur vertical 4, qui est séparé de son symétrique par un ventilateur 5.

Situé à l'extérieur de la chambre de cuisson 3, sur le côté extérieur de l'enceinte 2, on trouve le moteur 14 du ventilateur 5 ; le moteur et le ventilateur sont reliés l'un à l'autre par un axe de transmission.

Disposé en bas de chaque échangeur de chaleur 4, et représenté en pointillé, on trouve un brûleur 7 dont la flamme, lors de l'utilisation du four, chauffe les échangeurs de chaleur verticaux 4.

L'ensemble de production d'air chaud 1 comporte donc deux échangeurs de chaleur 4 dont la section a une forme de triangle isocèle à angle droit, dont la base est orientée vers le centre de la chambre de cuisson 3, donc du four.

La forme en triangle isocèle de la section de chaque échangeur de chaleur 4 possède des angles biseautés ou arrondis, afin de faciliter la fluidité de la circulation de l'air dans les espaces en avant 11 et en arrière 12 de l'échangeur de chaleur 4.

Situé au centre de la chambre de cuisson 3, on trouve un cercle en pointillé. Celui-ci représente les positions différentes que peuvent prendre les angles formant le chariot mobile de cuisson lors d'une rotation.

On remarque, ainsi, que la forme triangulaire des échangeurs de chaleur 4 est adaptée à des angles, qui ne sont généralement pas utilisés dans l'état antérieur de la technique.

Chaque échangeur de chaleur 4 est séparé de la chambre de cuisson 3 par une plaque verticale 13 positionnée parallèlement à la base du triangle formé par la section de l'échangeur 4.

La plaque verticale 13 possède une structure qui lui permet de faire office de vaporisateur d'eau, le chauffage étant assuré par la convection de l'air situé dans l'espace avant 11, c'est-à-dire entre la plaque verticale 13 et l'échangeur de chaleur 4, et l'air situé dans la chambre de cuisson 3.

L'espace avant 11, entre l'échangeur de chaleur 4 et la plaque verticale 13, est moins large que l'espace arrière 12, entre ledit échangeur 4 et l'encoignure 10 de la chambre de cuisson 3, de sorte que les débits dans les espaces avant et arrière 11, 12 soient identiques.

On remarque que les plaques verticales 13 sont fixées à une paroi qui jouxte le ventilateur 5.

Néanmoins, lesdites plaques verticales 13 peuvent être en contact avec la paroi interne de l'enceinte 2 par leur autre côté, resté libre sur la figure 1.

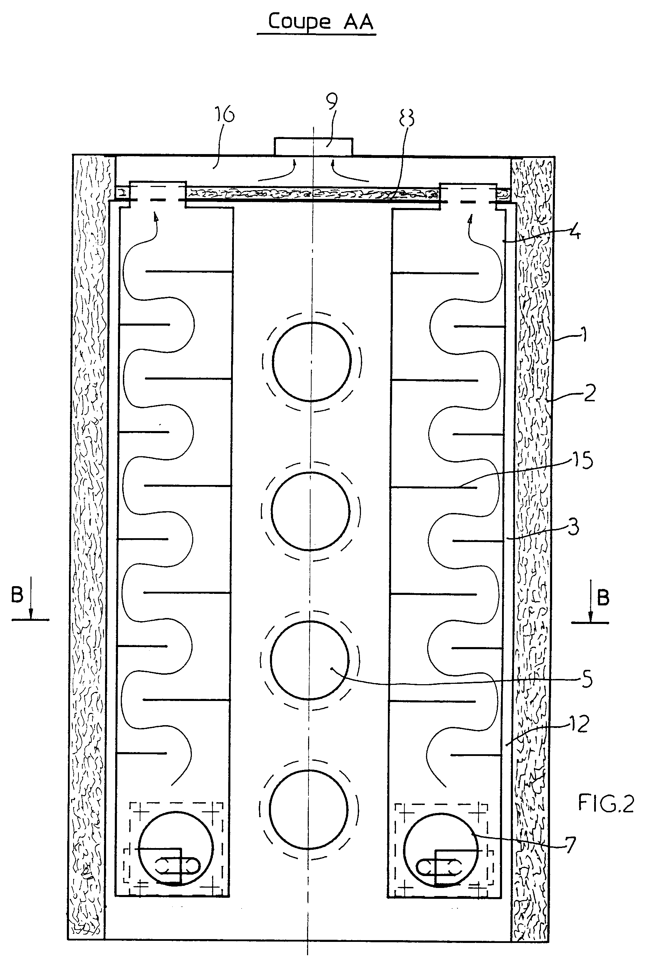

Selon la figure 2, on comprend mieux le parcours des gaz de combustion chauds qui permettent le chauffage de la chambre de cuisson 3.

A l'intérieur de chaque échangeur de chaleur 4, les gaz de combustion dus aux brûleurs 7 sont ascendants, à travers un réseau de chicanes 15, dont la surface est supérieure à la moitié de la section horizontale de l'échangeur 4, et font un angle avec la verticale, égal ou légèrement supérieur à 90 degrés.

Les gaz de combustion vont donc avoir un déplacement du bas vers le haut, c'est-à-dire des brûleurs 7 vers la paroi supérieure 8 de la chambre de cuisson 3, en zigzag, pour aboutir en haut dans une chambre de réception 16 des gaz de combustion de tous les échangeurs 4, qui seront évacués par le collecteur 9 qui est dans le prolongement d'une cheminée.

Pour améliorer le chauffage d'un four froid, on peut avoir, en combinaison, le chauffage de la chambre de cuisson 3 par, au moins, un échangeur de chaleur vertical 4 placé dans une encoignure 10 de la chambre 3, et par, au moins, une résistance électrique de forme circulaire, placée autour d'au moins un ventilateur 5.

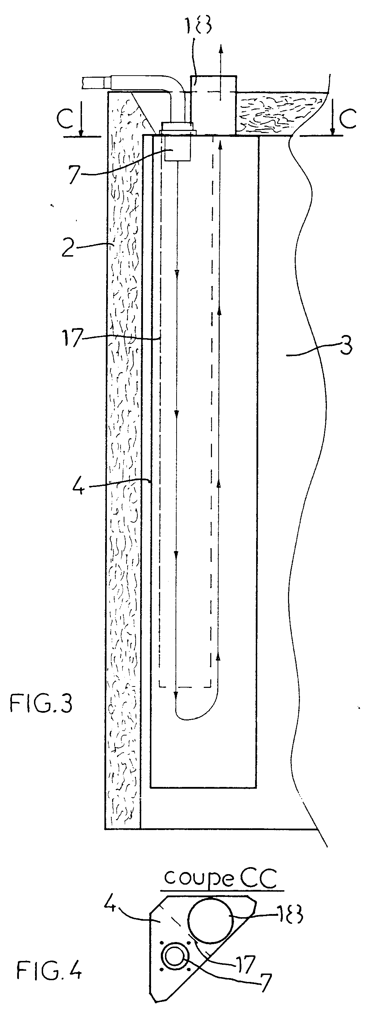

La figure 3 présente un échangeur de chaleur 4 différent du précédent, mais qui peut tout aussi bien fonctionner avec l'ensemble de production d'air chaud 1.

A l'intérieur de chaque échangeur de chaleur vertical 4, les brûleurs 7 sont placés dans la partie supérieure de l'échangeur 4, juste à côté d'un orifice d'échappement en contact avec la chambre de réception 16 des gaz de combustion, ou, comme cela est représenté sur la figure 3, juste à côté d'un collecteur 18.

De ce fait, les gaz de combustion dus aux brûleurs 7 sont descendants, le long d'une chicane unique longitudinale 17, jusqu'à la partie inférieure de l'échangeur 4 où les gaz passent de l'autre côté de la chicane 17 et sont, ensuite, ascendants jusqu'à un orifice d'échappement ou un collecteur 18.

La chicane 17 est représentée en pointillé.

La figure 4 montre, en coupe, la partie supérieure de l'échangeur vertical 4.

On remarque qu'il y a deux ouvertures, l'une plus petite pour le passage du brûleur 7, l'autre plus grande qui sert de collecteur 18.

Placé entre les deux ouvertures, et représentée en pointillé, on trouve la chicane 17, qui sépare en deux l'échangeur 4 dans ses parties supérieure et médiane.

### REFERENCES

- 1.: Ensemble de production d'air chaud
- 2.: Enceinte
- 3.: Chambre de cuisson
- 4.: Echangeur de chaleur vertical
- 5.: Ventilateur
- 6.: Paroi intérieure arrière
- 7.: Brûleur
- 8.: Paroi supérieure intérieure
- 9.: Collecteur
- 10.: Encoignure
- 11.: Espace avant
- 12.: Espace arrière
- 13.: Plaque verticale
- 14.: Moteur de ventilateur
- 15.: Réseau de chicanes
- 16.: Chambre de réception des gaz de combustion
- 17.: Chicane unique longitudinale
- 18.: Collecteur

## Revendications

1. Ensemble de production d'air chaud (1), notamment pour fours de boulangerie, pâtisserie, ou analogue, à chariots fixes ou mobiles, à recyclage d'air, du type formé par une enceinte (2) entourant une chambre parallélépipèdique de cuisson (3) comportant, au moins, un échangeur de chaleur vertical (4) et une série de ventilateurs (5) disposée verticalement sur la paroi intérieure arrière (6) de la chambre de cuisson (3) ; chaque échangeur de chaleur (4) étant chauffé par un brûleur (7) disposé à la base ou à la partie supérieure de l'échangeur de chaleur vertical (4), tandis que dans la partie supérieure de la chambre (3), on trouve un collecteur (9) aboutissant à une cheminée, caractérisé par le fait
qu'un échangeur de chaleur vertical (4) est disposé dans au moins une encoignure (10) de la partie arrière de la chambre de cuisson (3), et
que la forme de l'échangeur (4) est apte à coopérer avec les formes de l'encoignure (10) pour créer des espaces en avant (11) et en arrière (12) de l'échangeur de chaleur (4), favorisant les échanges d'air.

2. Ensemble de production d'air chaud (1) selon la revendication 1 caractérisé par le fait
qu'il comporte deux échangeurs de chaleur verticaux (4) qui sont disposés dans les deux encoignures (10) de la partie arrière de la chambre de cuisson (3), la série de ventilateurs (5) occupant la partie médiane de la paroi arrière (6) de la chambre de cuisson (3).

3. Ensemble de production d'air chaud (1) selon l'une quelconque des revendications 1 ou 2 caractérisé par le fait
que chaque échangeur de chaleur (4) possède une section transversale triangulaire, ou de forme similaire, qui coopère avec une encoignure (10) à angle droit de la partie arrière de la chambre de cuisson (3).

4. Ensemble de production d'air chaud (1) selon la revendication 3 caractérisé par le fait
que chaque échangeur de chaleur (4) possède une section ayant une forme de triangle isocèle à angle droit, dont la base est orientée vers le centre de la chambre de cuisson (3).

5. Ensemble de production d'air chaud (1) selon l'une quelconque des revendications 3 ou 4, caractérisé par le fait
que chaque échangeur de chaleur (4) possède des angles biseautés ou arrondis, afin de faciliter la fluidité de la circulation de l'air dans les espaces en avant (11) et en arrière (12) de l'échangeur de chaleur (4).

6. Ensemble de production d'air chaud (1) selon l'une quelconque des revendications 3, 4 ou 5, caractérisé par le fait
que chaque échangeur de chaleur (4) est séparé de la chambre de cuisson (3) par une plaque verticale (13) positionnée parallèlement à la base du triangle formé par la section de l'échangeur (4).

7. Ensemble de production d'air chaud (1) selon la revendication 6, caractérisé par le fait
que la plaque verticale (13) possède une structure qui lui permet de faire office de vaporisateur d'eau, le chauffage étant assuré par la convection de l'air situé dans l'espace avant (11), c'est-à-dire entre la plaque verticale (13) et l'échangeur de chaleur (4), et l'air situé dans la chambre de cuisson (3).

8. Ensemble de production d'air chaud (1) selon l'une quelconque des revendications 6 ou 7, caractérisé par le fait
que l'espace avant (11), entre l'échangeur de chaleur (4) et la plaque verticale (13), est moins large que l'espace arrière (12), entre ledit échangeur (4) et l'encoignure (10) de la chambre de cuisson (3), de sorte que les débits dans les espaces avant et arrière (11, 12) soient identiques.

9. Ensemble de production d'air chaud (1) selon l'une quelconque des revendications 1, 2, 3, 4, 5, 6, 7 ou 8, caractérisé par le fait
qu'à l'intérieur de chaque échangeur de chaleur (4), les gaz de combustion dus aux brûleurs (7) sont ascendants, à travers un réseau de chicanes (15), dont la surface est supérieure à la moitié de la section horizontale de l'échangeur (4), et font un angle avec la verticale égal ou légèrement supérieur à 90 degrés.

10. Ensemble de production d'air chaud (1) selon l'une quelconque des revendications 1, 2, 3, 4, 5, 6, 7 ou 8, caractérisé par le fait
qu'à l'intérieur de chaque échangeur de chaleur vertical (4) les gaz de combustion dus aux brûleurs (7) sont descendants, le long d'une chicane unique longitudinale (17), jusqu'à la partie inférieure de l'échangeur (4) où les gaz passent de l'autre côté de la chicane (17) et sont, ensuite, ascendants jusqu'à un orifice d'échappement ou un collecteur (18).

11. Ensemble de production d'air chaud (1) selon l'une quelconque des revendications 1, 2, 3, 4, 5, 6, 7, 8, 9 ou 10, caractérisé par le fait
que le chauffage de la chambre de cuisson (3) s'effectue par la combinaison d'au moins un échangeur de chaleur vertical (4) placé dans une encoignure (10) de la chambre (3), et d'au moins, une résistance électrique de forme circulaire, placée autour d'au moins un ventilateur (5).

## Claims

1. Unit for the production of hot air (1), in particular for the ovens of bakeries, confectionaries or suchlike, with fixed or movable carriages and air recycling, of the type formed by a casing (2) surrounding a parallelepiped-shaped combustion chamber (3) comprising at least one vertical heat exchanger (4) and a series of fans (5) which are vertically disposed at the rear inner wall (6) of the combustion chamber (3); each heat exchanger (4) being heated by a burner (7) which is disposed at the base or at the upper portion of the vertical heat exchanger (4), whereas a collecting port (9) can be found in the upper portion of the chamber (3), which port ends in a chimney, characterized in
that a vertical heat exchanger (4) is disposed in at least one inner corner (10) of the rear portion of the combustion chamber (3), and
that the shape of the exchanger (4) is adapted to the cooperation with the shapes of the inner corner (10) in order to create spaces in front of (11) and behind (12) the heat exchanger (4), which favour the exchanges of air.

2. Unit for the production of hot air (1) as claimed in claim 1, characterized in
that it comprises two vertical heat exchangers (4) which are disposed in both inner corners (10) of the rear portion of the combustion chamber (3), the series of fans (5) occupying the central portion of the rear wall (6) of the combustion chamber (3).

3. Unit for the production of hot air (1) as claimed in any one of the claims 1 or 2, characterized in
that each heat exchanger (4) has a triangular or similiar cross-section cooperating with a rectangular inner corner (10) of the rear portion of the combustion chamber (3).

4. Unit for the production of hot air (1) as claimed in claim 3, characterized in
that each heat exchanger (4) has a cross-section in the form of an isosceles and right-angled triangle, the basis therof being orientated to the centre of the combustion chamber (3).

5. Unit for the production of hot air (1) as claimed in any one of the claims 3 or 4, characterized in
that each heat exchanger (4) has bevelled or rounded angles in order to facilitate the fluidity of air in the spaces in front of (11) and behind (12) the heat exchanger (4).

6. Unit for the production of hot air (1) as claimed in any one of the claims 3, 4 or 5, characterized in
that each heat exchanger (4) is separated from the combustion chamber by a vertical plate (13) which is disposed parallel to the basis of the triangle formed by the cross-section of the exchanger (4).

7. Unit for the production of hot air (1) as claimed in claim 6, characterized in
that the vertical plate (13) has a structure which allows it to serve as an water vaporizer, the heating being secured by the convection of the air in the front space (11), i.e. between the vertical plate (13) and the heat exchanger (4), and of the air in the combustion chamber (3).

8. Unit for the production of hot air (1) as claimed in any one of the claims 6 or 7, characterized in
that the front space (11) between the heat exchange (4) and the vertical plate (13) is less large then the rear space (12) between said exchanger (4) and the inner corner (10) of the combustion chamber (3), in such a way that the flow rates in the front and rear spaces (11, 12) are identical.

9. Unit for the production of hot air (1) as claimed in any one of the claims 1, 2, 3, 4, 5, 6, 7 or 8, characterized in
that in the inside of each heat exchanger (4) the combustion gases due to the burners (7) rise upwardly over a lattice of baffle plates (15) whose surfaces are larger then half of the horizontal cross-section of the exchanger (4), and which form an angle in view of the vertical, which angle is equal to 90° or slightly larger.

10. Unit for the production of hot air (1) as claimed in any one of the claims 1, 2, 3, 4, 5, 6, 7 or 8, characterized in
that in the inside of each vertical heat exchanger (4) the combustion gases due to the burners (7) sink downwardly along a single longitudinal baffle plate (17) to the lower portion of the heat exchanger (4), where the gases pass to the other side of the baffle plate (17) and then rise up to an exhaust orifice or a collecting port (18).

11. Unit for the production of hot air (1) as claimed in any one of the claims 1, 2, 3, 4, 5, 6, 7, 8, 9 or 10, characterized in
that the heating of the combustion chamber (3) is effected by the combination of at least one vertical heat exchanger (4) which is disposed in an inner corner (10) of the chamber (3), and a circular electric resistance which is disposed around at least one fan (5).

## Patentansprüche

1. Einheit zum Erzeugen von Heißluft (1), insbesondere für die Öfen von Brot- und Feinbäckereien oder dergleichen, mit festen oder beweglichen Wagen und mit Luftrückführung, die der Art nach von einem Mantel (2) gebildet ist, der eine parallelepiped- bzw. quaderförmige Brennkammer (3) umgibt, die mindestens einen vertikalen Wärmeaustauscher (4) und eine Reihe von Lüftern (5) aufweist, die vertikal auf der hinteren Innenwand (6) der Brennkammer (3) angeordnet sind; wobei jeder Wärmeaustauscher(4) von einem Brenner (7) beheizt ist, der an der Unterseite oder am oberen Abschnitt des vertikalen Wärmeaustauschers (4) angeordnet ist, während im oberen Abschnitt der Kammer (3) ein Sammelkanal (9) zu finden ist, der in einen Kamin einmündet, dadurch gekennzeichnet,
daß ein vertikaler Wärmeaustauscher(4) in mindestens einer Innenecke (10) des hinteren Abschnitts der Brennkammer (3) angeordnet ist, und
daß die Form des Austauschers (4) dazu eingerichtet ist, mit den Formen der Innenecke (10) zusammenzuwirken, um Räume vor (11) und hinter (12) dem Wärmeaustauscher (4) zu erzeugen, die die Luftaustauschvorgänge begünstigen.

2. Einheit zum Erzeugen von Heißluft (1) nach Anspruch 1, dadurch gekennzeichnet,
daß sie zwei vertikale Wärmeaustauscher (4) aufweist, die in den beiden Innenecken (10) des hinteren Teils der Brennkammer (3) angeordnet sind, wobei die Reihe von Lüftern (5) den mittleren Abschnitt der Rückwand (6) der Brennkammer (3) einnimmt.

3. Einheit zum Erzeugen von Heißluft (1) nach irgendeinem der Ansprüche 1 oder 2, dadurch gekennzeichnet,
daß jeder Wärmeaustauscher (4) einen Querschnitt aufweist, der dreieckig ist oder eine ähnliche Form aufweist, und mit einer rechtwinkligen Innenecke (10) des hinteren Teils der Brennkammer (3) zusammenwirkt.

4. Einheit zum Erzeugen von Heißluft (1) nach Anspruch 3, dadurch gekennzeichnet,
daß jeder Wärmeaustauscher (4) einen Querschnitt besitzt, der die Form eines gleichschenkligen, rechtwinkligen Dreiecks aufweist, dessen Basis der Mitte der Brennkammer (3) zugewandt ist.

5. Einheit zum Erzeugen von Heißluft (1) nach irgendeinem der Ansprüche 3 oder 4, dadurch gekennzeichnet,
daß jeder Wärmeaustauscher (4) abgeschrägte oder abgerundete Winkel aufweist, um das Fließvermögen der Luft in den Räumen vor (11) und hinter (12) dem Wärmeaustauscher (4) zu erleichtern.

6. Einheit zum Erzeugen von Heißluft (1) nach irgendeinem der Ansprüche 3, 4 oder 5, dadurch gekennzeichnet,
daß jeder Wärmeaustauscher (4) von der Brennkammer (3) durch eine vertikale Platte (13) getrennt ist, die parallel zur Basis des Dreiecks angeordnet ist, das vom Querschnitt des Austauschers (4) gebildet ist.

7. Einheit zum Erzeugen von Heißluft (1) nach Anspruch 6, dadurch gekennzeichnet,
daß die vertikale Platte (13) eine Struktur besitzt, die es ihr gestattet, als Wasserverdampfer zu dienen, wobei die Beheizung durch die Konvektion der Luft sichergestellt ist, die im vorderen Raum (11) befindlich ist, d. h. zwischen der vertikalen Platte (13) und dem Wärmeaustauscher (4), und der Luft, die in der Brennkammer (3) befindlich ist.

8. Einheit zum Erzeugen von Heißluft (1) nach irgendeinem der Ansprüche 6 oder 7, dadurch gekennzeichnet,
daß der vordere Raum (11) zwischen dem Wärmeaustauscher (4) und der vertikalen Platte (13) weniger groß ist als der hintere Raum (12) zwischen dem genannten Austauscher (4) und der Innenecke (10) der Brennkammer (3), und zwar derart, daß die Durchsätze im vorderen und hinteren Raum (11, 12) identisch sind.

9. Einheit zum Erzeugen von Heißluft (1) nach irgendeinem der Ansprüche 1, 2, 3, 4, 5, 6, 7 oder 8, dadurch gekennzeichnet,
daß im Inneren eines jeden Wärmeaustauschers (4) die Verbrennungsgase, die von den Brennern (7) herrühren, über ein Gitter von Prallflächen (15) nach oben steigen, deren Oberfläche größer ist als die Hälfte des horizontalen Querschnitts des Austauschers (4), und die gegenüber der Vertikalen einen Winkel bilden, der gleich 90° oder ein wenig größer ist.

10. Einheit zum Erzeugen von Heißluft (1) nach irgendeinem der Ansprüche 1, 2, 3, 4, 5, 6, 7 oder 8, dadurch gekennzeichnet,
daß im Inneren eines jeden vertikalen Wärmeaustauschers (4) die Verbrennungsgase, die von den Brennern (7) herrühren, längs einer einzigen Längs-Prallfläche (17) bis zum unteren Abschnitt des Wärmeaustauschers (4) nach unten sinken, wo die Gase zur anderen Seite der Prallfläche (17) überwechseln und dann bis zu einer Auslaßöffnung oder bis zu einem Sammelkanal (18) ansteigen.

11. Einheit zum Erzeugen von Heißluft (1) nach irgendeinem der Ansprüche 1, 2, 3, 4, 5, 6, 7, 8, 9 oder 10, dadurch gekennzeichnet,
daß die Beheizung der Brennkammer (3) durch die Kombination aus mindestens einem vertikalen Wärmeaustauscher (4), der in einer Innenecke (10) der Kammer (3) angeordnet ist, und mindestens einem kreisförmigen, elektrischen Widerstand bewirkt wird, der rund um mindestens einen Lüfter (5) angeordnet ist.
